# NEUE EUROPÄISCHE PATENTSCHRIFT

(11) **EP 2 839 729 B2**
(45) Veröffentlichungstag und Bekanntmachung des Hinweises auf die Entscheidung über den Einspruch: **22.05.2019**
(45) Hinweis auf die Patenterteilung: 18.05.2016
(21) Anmeldenummer: 14169203.8
(22) Anmeldetag: 21.05.2014
(51) Int. Cl.: A01D 41/12

(54) **Mähdrescher mit einer Häckselvorrichtung**
Combine harvester with a chopping device
Moissonneuse-batteuse équipée d'un dispositif de hache-paille

(30) Priorität: 19.08.2013 DE 102013108923
(43) Veröffentlichungstag der Anmeldung: 25.02.2015
(73) Patentinhaber: CLAAS Selbstfahrende Erntemaschinen GmbH, 33428 Harsewinkel (DE)
(72) Erfinder: Knierbein, Claudius, 59510 Lippetal-Herzfeld (DE); Strieker, Norbert, 33415 Verl (DE); Terörde, Stefan, 48231 Wafrendorf (DE); Vieregge, Christopher, 32694 Dörentrup (DE); Schiewer, Stefan, 32791 Lage (DE)
(74) Vertreter: CLAAS Gruppe

(56) Entgegenhaltungen:
- EP-A1- 1 400 162
- EP-B1- 0 408 156
- DE-A1- 4 344 649
- DE-A1-102006 045 789
- DE-C1- 3 544 157
- US-A- 4 696 381
- US-A- 4 735 216
- US-A1- 2007 015 556

## Beschreibung

Die vorliegende Erfindung betrifft einen Mähdrescher mit einer Häckselvorrichtung gemäß dem Oberbegriff des Anspruches 1.

Aus der DE 197 50 393 A1 ist ein mechanischer Antrieb für einen einer Reinigungseinrichtung nachgeordneten Spreuverteiler bekannt, welcher zwei oder mehr Gebläseeinheiten aufweist, die mechanisch angetrieben werden. Hierzu ist eine Kellriemenscheibe frei drehbar auf einer Welle angeordnet, die durch eine Kupplung kraftschlüssig mit der Keilriemenscheibe verbindbar ist. Der Antrieb der Kellriemenscheibe erfolgt über einen Antriebsstrang des Mähdreschers, ohne dies näher zu spezifizieren. Mit der Welle ist eine Gelenkwelle verbunden, die ein eingeleitetes Drehmoment auf eine Antriebswelle eines Kegelradgetriebes weiterleitet. Auf der Abtriebswelle des Kegelradgetriebes, welche eine der Gebläseeinheiten antreibt, sitzt eine Keilriemenscheibe, welche über einen Keilriemen die anderen Gebläseeinheiten antreibt. Diese Form des Antriebs für eine Verteilvorrichtung zeichnet sich durch eine hohe Komplexität aus.

Die US2007/015556 A1 beschreibt einen Mähdrescher mit einer Häckselvorrichtung sowie einer dieser nachgeordneten Verteilvorrichtung. Die Verteilvorrichtung umfasst zwei Läufer. Die Verteilvorrichtung wird durch einen Antriebsstrang mechanisch angetrieben.

Ferner ist ein gattungsgemässer Mähdrescher aus dem Produktkatalog der Fa. Claas 2010 bekannt.

Aufgabe der vorliegenden Erfindung ist es, einen Mähdrescher der eingangs genannten Art weiterzubilden, dass sich dieser durch einen einfachen und energieeffizienten Antrieb seiner Verteilvorrichtung auszeichnet.

Diese Aufgabe wird erfindungsgemäß durch die kennzeichnenden Merkmale des Anspruches 1 gelöst.

Vorteilhafte Weiterbildungen sind Gegenstand der Unteransprüche.

Gemäß dem Anspruch 1 wird vorgeschlagen, dass der Antriebsstrang der Verteilvorrichtung Folgendes umfasst:
- einen durch eine Kupplung schaltbaren Riementrieb, der über eine Abtriebswelle eine erste Getriebestufe antreibt,
- zumindest eine zweite Getriebestufe, die mit der ersten Getriebestufe durch eine Welle antriebsmäßig verbunden ist, wobei die jeweilige Getriebestufe zumindest eine Abtriebswelle zum Antreiben eines jeweiligen Läufer aufweist,
- sowie eine Bremsvorrichtung. Der Riementrieb wird als Kupplung verwendet. Der Antriebsstrang lässt sich durch den als Kupplung verwendeten Riementrieb unterbrechen, wenn das Häckselaggregat sowie die Verteilvorrichtung stillgesetzt werden sollen. Die Verwendung des Riementriebs als Kupplung stellt eine kostengünstige Lösung dar, da auf zusätzliche Bauteile im Antriebsstrang verzichtet werden kann. Der Riementrieb ist antriebsseitig an die Häckselvorrichtung gekoppelt. Diese Kopplung ist vor dem Hintergrund sinnvoll, dass die Häckselvorrichtung und die Verteilvorrichtung stets gemeinsam aktiv beziehungsweise inaktiv sind. Wird die Häckselvorrichtung abgeschaltet, weil auf Schwadablagebetrieb umgeschaltet wird, wird automatisch auch der Antrieb der Verteilvorrichtung stillgesetzt. Der mechanische Antrieb der Verteilvorrichtung weist gegenüber einem hydraulischen Antrieb den Vorteil auf, dass sich der mechanische Antrieb durch seine Drehzahlstabilität auszeichnet, woraus eine höhere Verteilstabilität resultiert. In Hinblick auf Sicherheitsanforderungen an den Betrieb von Verteilvorrichtungen, deren Läufer zumindest teilweise freiliegend angeordnet sind, ist es erforderlich, lange Nachlaufzeiten auf Grund der Massenträgheit zu vermeiden. Hierfür sind entsprechend eine Kupplung sowie eine Bremse in den Antriebsstrang integriert, die diesen einerseits auftrennen, um den Antriebsstrang der Verteilvorrichtung vom Mähdrescher zu entkoppeln, und andererseits die Läufer aktiv abbremsen. Auf diese Weise wird ein schnelles Abbremsen der Verteilvorrichtung beziehungsweise der Läufer erreicht.

Vorzugsweise kann der Riementrieb durch einen Stufenantrieb angetrieben sein. Durch das Umlegen des Riemens von einer Riemenscheibe größeren Durchmessers auf eine Riemenscheibe kleineren Durchmessers lässt sich auf einfache Weise eine Drehzahlverstellung realisieren. Dies ist von Bedeutung, wenn Erntegut, wie beispielsweise Mais, verarbeitet wird, welches auf Grund seiner Eigenschaften eine niedrigere Antriebsdrehzahl der Häckselvorrichtung erfordert, die Verteilbreite jedoch unverändert bleibt, so dass die Antriebsdrehzahl der Verteilvorrichtung gegenüber der der Häckselvorrichtung wesentlich höher sein muss. Durch den Stufenantrieb lässt sich eine entsprechende Übersetzung realisieren.

Alternativ kann der Riementrieb durch einen Variator angetrieben sein. Der Variator erlaubt eine stufenlose Verstellung der Antriebsdrehzahl der Verteilvorrichtung, wodurch eine bessere Anpassung an sich ändernde Erntebedingungen erreichbar ist.

Der Riementrieb kann eine Spannrolle aufweisen, die durch einen Aktor betätigbar ist. Die Spannrolle ist in Verbindung mit einem Stufengetriebe oder einem Variator zwingend erforderlich, um die Riemenspannung aufrecht zu erhalten. Entsprechend wird der Aktor angesteuert, um beispielsweise bei einem Umlegen des Riemens die notwendige Riemenspannung aufzubringen. Ist hingegen das Anhalten der Verteilvorrichtung und mit dieser das der freiliegenden Läufer erforderlich, weil der Mähdrescher beispielsweise auf eine andere Fruchtart umgestellt werden soll, so wird der Aktor entsprechend angesteuert, so dass die Riemenspannung nicht aufrechterhalten wird, indem die Kupplung ausgerückt wird.

Vorteilhafterweise kann der Aktor als hydraulisch betätigbarer Hubzylinder ausgeführt sein. Insbesondere kann der Hubzylinder als einfach wirkender Hubzylinder ausgeführt sein. Hierbei weist der einfache wirkende Hubzylinder ein Federelement auf, welches kolbenseitig den Hubzylinder mit einer Kraft beaufschlagt, die der Rückstellung des Hubzylinders dient, wenn die Kupplung ausgerückt wird. Der einfach wirkende Hubzylinder kann über eine Hebelanordnung derart mit der Spannrolle verbunden sein, dass bei eingezogener Kolbenstange die Spannrolle gegen den Riemen presst wird, während bei ausgefahrener Kolbenstange die Spannrolle vom Riemen beabstandet wird. Bei in den Hubzylinder eingezogener Kolbenstange ist die Kupplung aktiv, während sie bei ausgefahrener Kolbenstange ausgerückt ist.

Insbesondere kann der Hubzylinder an einen ersten und die Bremse an einen zweiten Hydraulikkreislauf am Mähdrescher gekoppelt sein, die mit unterschiedlichen hydraulischen Drücken arbeiten. Hierbei kann der Hubzylinder permanent mit dem hydraulischen Druck des zweiten Hydraulikkreislaufes und temporär mit dem hydraulischen Druck des ersten Hydraulikkreislaufes beaufschlagt werden, während die Bremse nur mit dem ersten Hydraulikkreislauf in Verbindung steht oder von diesem entkoppelt ist.

In bevorzugter Weiterbildung können die Bremse und die Kupplung über ein gemeinsames Ventil schaltbar sein. Das Ventil ist vorzugsweise hydraulisch beaufschlagbar und ermöglicht das wahlweise Schalten von Bremse oder Kupplung. Hierzu kann das Ventil zwei Schaltstellungen aufweisen, so dass bei betätigter Kupplung die Bremse gelöst ist, während bei ausgeschalteter Kupplung die Bremse betätigt ist. Erreicht wird dies bei einem einfach wirkenden Hubzylinder dadurch, dass in einer ersten Schaltstellung, in der die Kupplung eingerückt und die Bremse inaktiv ist, der Hubzylinder ringseitig mit dem hydraulischen Druck des ersten Hydraulikkreislaufes, der höher ist als der des zweiten Hydraulikkreislaufs ist, beaufschlagt wird, so dass der Hubzylinder die Kupplung einrückt, um durch die Spannrolle die Riemenspannung aufrecht zu erhalten, während kolbenseitig der Hydraulikdruck des zweiten Hydraulikkreislaufes anliegt. Hingegen wird die Bremse in der ersten Schaltstellung des Ventils von dem ersten Hydraulikkreislauf entkoppelt, so dass diese nicht mit einem hydraulischen Druck beaufschlagt ist, so dass sich die Bremse in gelöster Position befindet. In der zweiten Schaltstellung des Ventils, in der die Kupplung ausgerückt ist und die Bremse aktiv ist, wird die Bremse mit dem hydraulischen Druck des ersten Hydraulikkreislaufes beaufschlagt. Der Hubzylinder wird in der zweiten Schaltstellung des Ventils ringseitig von dem ersten Hydraulikkreislauf getrennt, so dass durch den hydraulischen Druck des zweiten Hydraulikkreises, der kolbenseitig ansteht, sowie unterstützt von einer kolbenseitig anstehenden Federkraft, die Kolbenstange des Hubzylinders ausgefahren wird. Dadurch die Hebelanordnung derart betätigt, dass die Spannrolle von dem Riementrieb beabstandet wird, das heißt die Kupplung ausgerückt ist.

Vorzugsweise kann die Bremse an einer der weiteren Getriebestufen angeordnet sein.

Alternativ hierzu kann die Bremse in einer Riemenscheibe des Antriebsstranges angeordnet sein. Hierzu kann die Bremse als Trommelbremse ausgeführt sein.

Dabei kann das Ventil in Abhängigkeit vom Betriebszustand der Häckselvorrichtung schaltbar sein. Das Ventil wird in Abhängigkeit vom Betriebszustand der Häckselvorrichtung geschaltet, wobei im laufenden Betrieb der Häckselvorrichtung das Ventil derart geschaltet ist, dass die Kupplung betätigt wird, um die Läufer der Verteilvorrichtung anzutreiben, während die Bremse in gelöster Stellung gehalten wird. Wird die Häckselvorrichtung abgeschaltet, so wird das Ventil derart angesteuert, dass die Bremse betätigt wird, während die Kupplung in gelöster Stellung gehalten wird, so dass der Riementrieb kein Antriebsmoment auf die Verteilvorrichtung übertragen kann. Vorzugsweis kann das Ventil als Schieberventil ausgeführt sein.

Die vorliegende Erfindung wird nachstehend anhand eines in den Zeichnungen dargestellten Ausführungsbeispieles näher erläutert.

Es zeigen:
- Fig. 1: eine schematische Seitenansicht eines Mähdreschers;
- Fig.2: eine perspektivische Ansicht einer Häcksel- und Verteilvorrichtung eines Mähdreschers gemäß Fig. 1;
- Fig. 3: einen Ausschnitt aus einem Hydraulikschaltplan der Verteilvorrichtung.

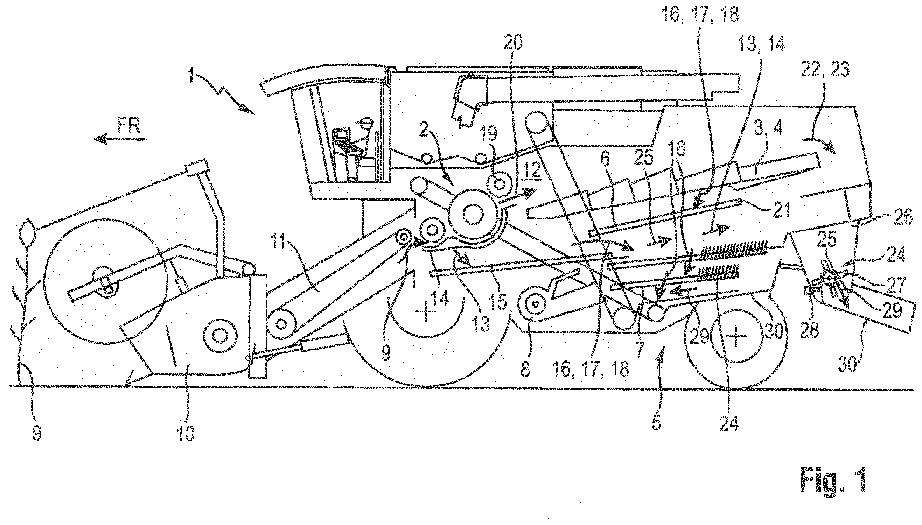

Fig.1 zeigt die Seitenansicht einer als Mähdrescher 1 ausgeführten Erntemaschine mit einem an sich bekannten und daher hier nicht näher beschriebenen Dreschwerk 2 und einem diesem nachgeordneten Hordenschüttler 3 als Abscheideorgan 4. Unterhalb des Hordenschüttlers 3 befindet sich eine Reinigungseinrichtung 5, bestehend aus zwei übereinander angeordneten Sieben 6, 7 und einem Reinigungsgebläse 8. Die Erfindung ist aber ausdrücklich nicht auf derartig ausgeführte Mähdreschertypen beschränkt, sondern bezieht sich beispielsweise auch auf Mähdrescher mit Axialabscheiderotoren als Abscheideorgan sowie Mähdrescher mit axial angeordneter Dresch-Trennvorrichtung.

Im vorderen Bereich ist an dem Mähdrescher 1 ein Schneidwerk 10 angeordnet, mit dem das Erntegut 9 geschnitten und aufgenommen wird. Das Schneidwerk 10 führt das Erntegut 9 einem Schrägförderer 11 zu, der frontseitig am Mähdrescher 1 angeordnet ist. Der Schrägförderer 11 übergibt das Erntegut 9 an das im Maschinengehäuse 12 angeordnete Dreschwerk 2 zum Ausdrusch. Ein überwiegend aus Körnern bestehendes Korn-Spreu-Gemisch 13 wird am Dresch- und Abscheidekorb 14 des Dreschwerks 2 abgeschieden und gelangt über einen Vorbereitungsboden 15 zu der Reinigungseinrichtung 5, um die Körner 16 von den Nichtkornbestandteilen, das heißt von Halmteilen 17 und Spreuteilen 18 zu trennen.

Im rückwärtigen Bereich ist dem Dreschwerk 2 eine rotierende Wendetrommel 19 zugeordnet, die den aus dem Dreschwerk 2 austretenden, im Wesentlichen aus ausgedroschenen Halmen bestehenden Gutstrom 20 annimmt und dem Hordenschüttler 3 zuführt, die den Gutstrom 20 in den rückwärtigen Bereich des Mähdreschers 1 fördert. Dabei werden die noch im Gutstrom 20 befindlichen Körner 16 sowie eventuell Kurzstroh 17 und Spreu 18 abgetrennt, indem sie durch den mit Sieböffnungen versehenen Hordenschüttler 3 hindurch auf einen Rücklaufboden 21 fallen. Der Rücklaufboden 21 transportiert Körner 16, Kurzstroh 17 und Spreu 18 zum Vorbereitungsboden 15.

Die Körner 16, das Kurzstroh 17 und die Spreu 18 gelangen schließlich ebenfalls über den Vorbereitungsboden 15 in die Reinigungseinrichtung 5, in welcher die Körner 16 vom Kurzstroh 17 und von der Spreu 18 getrennt werden. Das Stroh 22 sowie ein bestimmter Prozentsatz an Verlustkörnern 23 wandern über den Hordenschüttler 3 zum hinteren Ende des Mähdreschers 1, wo sie einer Häckselvorrichtung 24 und einer dieser zugeordneten Verteilvorrichtung 30 zugeführt werden. Die Häckselvorrichtung 24 weist unter anderem eine rotierende Häckseltrommel 25 auf, die in einem Häckslergehäuse 26 gelagert ist. Die Häckseltrommel 25 ist mit beweglichen Messern 27 besetzt, die mit im Häckslergehäuse 26 fest angeordneten Gegenmessern 28 kämmen. Mit diesen Messern 27 und den Gegenmessern 28 wird das Stroh 22 zu Häckselgut zerkleinert und beschleunigt. Ein größtenteils aus Spreu bestehende Siebüberlauf, der nicht durch das Obersieb 6 hindurch fällt, gelangt über das Obersieb 6 in den hinteren Bereich des Mähdreschers 1 und kann ebenfalls der Häckselvorrichtung 24 zugeführt werden. Der aus der Häckselvorrichtung 24 austretende, im Wesentlichen aus gehäckseltem Stroh 22 und Spreu bestehende Gutstrom 29 wird an eine Verteilvorrichtung 30 weiterbefördert, die den Gutstrom 29 auf dem Feld verteilen.

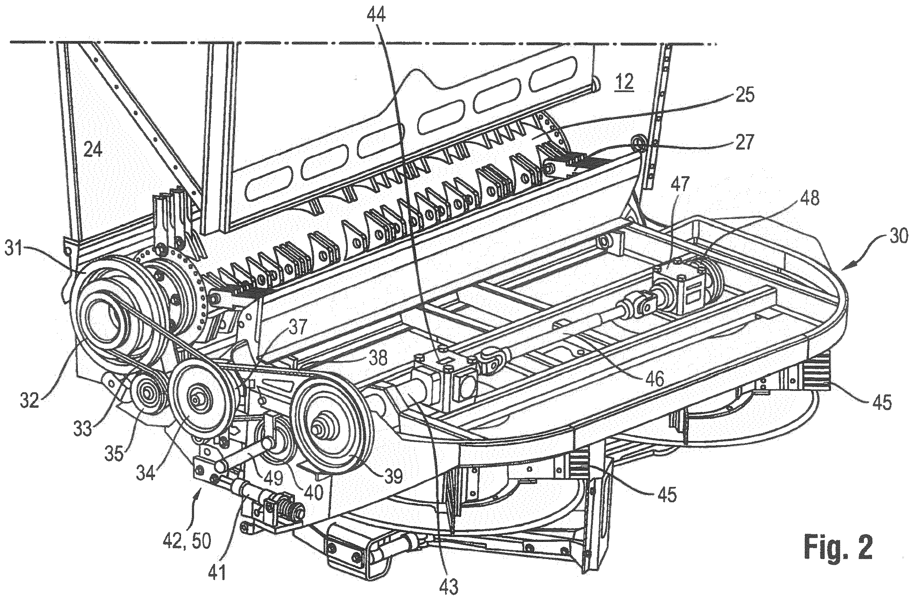

Die Darstellung in Fig. 2 zeigt eine perspektivische Ansicht einer Häcksel- und Verteilvorrichtung 24, 30 eines Mähdreschers 1 gemäß Fig. 1 sowie des Antriebsstranges der Verteilvorrichtung 30. In dem Maschinengehäuse 12 ist, wie weiter oben bereits ausgeführt, die Häckselvorrichtung 24 angeordnet. Der Antrieb der Häckselvorrichtung 24 erfolgt mittels eines nicht dargestellten Riemens, der eine koaxial zu der Häckseltrommel 25 angeordnete Antriebsriemenscheibe 31 umschlingt. Benachbart und koaxial zu der Antriebsriemenscheibe 31 sind zwei Abtriebsriemenscheiben 32 verschiedenen Durchmessers angeordnet, die einen Stufenantrieb 33 bilden. Der Stufenantrieb 33 ist durch einen Abtriebsriemen 36 mit einer Vorgelegestufe 34 verbunden. Eine Spannvorrichtung 35 hält die Riemenspannung des Abtriebsriemens 36 aufrecht. Die Vorgelegestufe 34 umfasst eine Abtriebsriemenscheibe 37, die von einem Antriebsriemen 38 umschlungen ist. Der Antriebsriemen 38 umschlingt außerdem eine Antriebsriemenscheibe 39, die dem Antrieb der Verteilvorrichtung 30 dient. Die Riemenspannung des Antriebsriemens 38 wird durch ein Spannsystem 49 aufrechterhalten, das eine durch einen Aktor betätigbare eine Spannrolle 40 umfasst. Der Aktor ist als hydraulisch betätigbarer Hubzylinder 41 ausgeführt, der einfach wirkend ist. Die Kolbenstange des Hubzylinder 41 betätigt die Spannrolle 40 durch eine Hebelanordnung 49, indem die Spannrolle 40 gegen den Antriebsriemen 38 gepresst oder zu diesem beabstandet wird. Im vorliegenden Ausführungsbeispiel befindet sich eine Kupplung 42 in einem Schaltzustand, so dass der Antriebsriemen 38 ein entsprechendes Drehmoment von der Abtriebsriemenscheibe 37 auf die Antriebsriemenscheibe 39 übertragen kann.

Von der Antriebsriemenscheibe 39 geht eine Abtriebswelle 43 ab, die in einer ersten Getriebestufe 44, die als Kegelradgetriebe ausgeführt ist, mündet. Von der ersten Getriebestufe 44 geht eine sich senkrecht zur Abtriebswelle 43 erstreckende Antriebswelle ab (nicht dargestellt), die dem Antrieb eines Läufers 45 der Verteilvorrichtung 30 dient. Weiterhin geht von der ersten Getriebestufe 44 eine Gelenkwelle 46 ab, die die erste Getriebestufe 44 antriebsmäßig mit einer zweiten Getriebestufe 47 verbindet. Auch von der zweiten Getriebestufe 47 geht eine sich senkrecht zur Abtriebswelle 43 erstreckende Antriebswelle ab (ebenfalls nicht dargestellt), die dem Antrieb eines weiteren Läufers 45 der Verteilvorrichtung 30 dient. Koaxial zur Abtriebswelle 43 ist an der zweiten Getriebestufe 47 eine Bremse 48 angeordnet.

Nachstehend wird die Funktionsweise des Antriebsstranges der Verteilvorrichtung 30 näher erläutert. Die Häckselvorrichtung 24 wird, wie weiter oben beschrieben wurde, durch die Antriebsriemenscheibe 31 angetrieben. Koaxial zu der Antriebsscheibe 31 ist eine weitere, in der Ansicht gemäß Fig. 2 nicht sichtbare Antriebsscheibe hinter der Antriebsscheibe 31 angeordnet, die einen kleineren Außendurchmesser aufweist, wodurch die Häckselvorrichtung 24 mit unterschiedlichen Drehzahlen antreibbar ist. Insbesondere bei der Verarbeitung von Mais als Erntegutart wird mit einer geringeren Antriebsdrehzahl gearbeitet, um Beschädigungen der Häckselvorrichtung 24 zu vermeiden. Um diese Drehzahlreduzierung bei einem mechanischen Antrieb der Verteilvorrichtung 30 zu kompensieren, ist der Stufenantrieb 33 vorgesehen, um die reduzierte Antriebsdrehzahl der Häckselvorrichtung 24 auf die für eine geleichmäßige Verteilbreite erforderliche Abtriebsdrehzahl für den Antrieb der Verteilvorrichtung 30 zu übersetzten. Als Alternative zum Stufenantrieb 33 kann in vorteilhafter Ausgestaltung auch ein Variator vorgesehen sein, der die Anpassung der Drehzahlübersetzung vereinfacht und zudem stufenlos gestaltet.

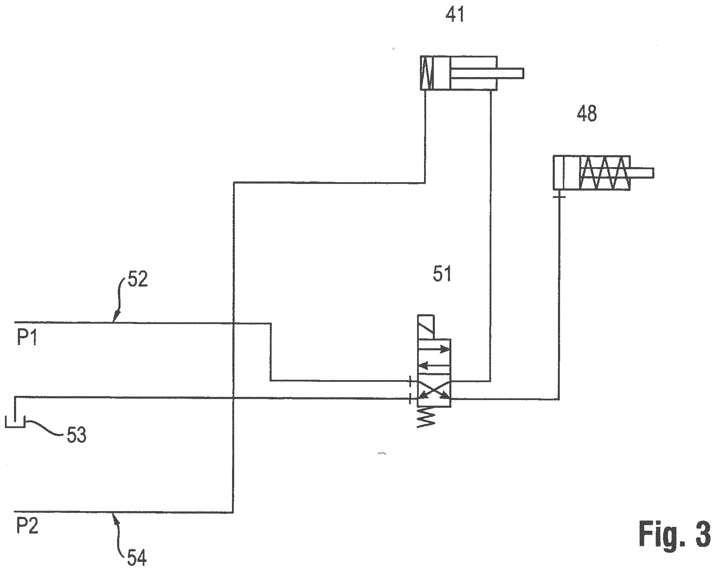

Die Riemenspannung des das Vorgelege 34 und die Antriebsriemenscheibe 39 umschlingenden Antriebsriemens 38 wird durch ein Spannsystem 50 aufrechterhalten. Der hydraulisch betätigbare Hubzylinder 41 wird entsprechend mit einem Hydraulikdruck beaufschlagt, um die Riemenspannung des Antriebsriemens 38 im Wesentlichen konstant zu halten. Die Beaufschlagung des Hubzylinders 41 erfolgt durch die Anbindung an einen Hydraulikkreislauf des Mähdreschers 1, was weiter unten anhand des in Fig. 3 dargestellten Ausschnittes aus einem Hydraulikschaltplan des Mähdreschers 1 erläutert wird.

Der Riementrieb, umfassend das Vorgelege 34, das Spannsystem 50, die Antriebsriemenscheibe 39 sowie den Antriebsriemen 38, fungiert als Kupplung 42, wenn die Häckselvorrichtung 24 abgeschaltet wird. Der notwendige Hydraulikdruck, der den Hubzylinder 41 entgegen der Kraft des Federelementes in seiner den Antriebsriemen 38 spannenden Stellung hält, steht dann nicht an, so dass der Hubzylinder 41 eingezogen wird. Die Spannrolle 40 wird mittels der Hebelanordnung 49 zurückgenommen, so dass der Antriebsriemen 38 kein Drehmoment vom Vorgelege 34 auf die Antriebsriemenscheibe 39 übertragen kann. Um im gleichen Augenblick die Bremse 48 an der zweiten Getriebestufe 47 zu aktivieren, damit beide Läufer 45 aktiv abgebremst werden, sind der Hubzylinder 41 und die Bremse 48 über ein Ventil 51 wirkverbunden, wie in dem Schaltplanauszug in Fig. 3 dargestellt ist.

Das als 4/2-Wege-Ventil ausgeführte Ventil 51 erlaubt lediglich zwei Schaltzustände, so dass entweder die Kupplung durch Beaufschlagung des Hubzylinders 41 oder die

Bremse 48 aktiv ist. Die Ansteuerung des Ventils 51 erfolgt in Abhängigkeit von dem jeweiligen Betriebszustand der Häckselvorrichtung 24. Bei nicht in Betrieb befindlicher Häckselvorrichtung 24, wie in dem Schaltplanausschnitt gemäß Fig. 3 dargestellt, steht an dem Ventil 51 ein erster Hydraulikdruck P1 eines ersten Hydraulikkreislaufes 52 des Mähdreschers 1 an, der die Bremse 48 entgegen der Rückstellkraft eines Federelementes mit einem hydraulischen Druck beaufschlagt, so dass die Bremse 48 aktiv ist und die Läufer 45 bremst. In dieser Schaltstellung des Ventils 51 steht an dem einfach wirkenden Hubzylinder 41 kolbenseitig ein zweiter Hydraulikdruck P2 eines zweiten Hydraulikkreislaufes 54 an, durch den der Hubzylinder 41 ausgefahren wird, so dass die Hebelanordnung 49 die Spannrolle 40 von dem Antriebsriemen 38 beabstandet, das heißt die Kupplung ausgerückt ist. Der erste Hydraulikdruck P1 ist hierzu größer als der zweite Hydraulikdruck P2.

Wird die Häckselvorrichtung 24 eingeschaltet, so wird das Ventil 51 entsprechend angesteuert, um die Kupplung 42 zu aktivieren und zugleich die Bremse 48 zu deaktivieren. Hierzu wird durch das Schalten des Ventils 51 die Bremse 48 drucklos geschaltet, das heißt, dass Hydrauliköl fließt zurück in einen Tank 53, während der Hubzylinder 41 ringseitig mit dem ersten Hydraulikdruck P1 beaufschlagt wird, so dass dessen Kolben entgegen des kolbenseitig anstehenden zweiten Hydraulikdrucks P2 eingeschoben wird, wodurch die Kupplung 42 aktiviert wird. Hierzu wird über die Hebelanordnung 49 die Spannrolle 40 gegen den Antriebsriemen 38 gepresst, wie aus der Darstellung in Fig. 2 ersichtlich.

**Bezugszeichenliste**

| | | | |
|---|---|---|---|
| **1** | Mähdrescher | **32** | Abtriebsriemenscheibe |
| **2** | Dreschwerk | **33** | Stufenantrieb |
| **3** | Hordenschüttler | **34** | Vorgelegestufe |
| **4** | Abscheideorgan | **35** | Spannvorrichtung |
| **5** | Reinigungseinrichtung | **36** | Abtriebsriemen |
| **6** | Sieb | **37** | Abtriebsriemenscheibe |
| **7** | Sieb | **38** | Antriebsriemen |
| **8** | Reinigungsgebläse | **39** | Antriebsriemenscheibe |
| **9** | Erntegut | **40** | Spannrolle |
| **10** | Schneidwerk | **41** | Hubzylinder |
| **11** | Schrägförderer | **42** | Kupplung |
| **12** | Maschinengehäuse | **43** | Abtriebswelle |
| **13** | Korn-Spreu-Gemisch | **44** | Erste Getriebestufe |
| **14** | Abscheidekorb | **45** | Läufer |
| **15** | Vorbereitungsboden | **46** | Gelenkwelle |
| **16** | Korn | **47** | Zweite Getriebestufe |
| **17** | Halmteil | **48** | Bremse |
| **18** | Spreuteil | **49** | Hebelanordnung |
| **19** | Wendetrommel | **50** | Spannsystem |
| **20** | Gutstrom | **51** | Ventil |
| **21** | Rücklaufboden | **52** | Erster Hydraulikkreislauf |
| **22** | Stroh | **53** | Tank |
| **23** | Verlustkörner | **54** | Zweiter Hydraulikkreislauf |
| **24** | Häckselvorrichtung | **P1** | Erster Hydraulikdruck |
| **25** | Häckseltrommel | **P2** | Zweiter Hydraulikdruck |
| **26** | Häckslergehäuse | | |
| **27** | Messer | | |
| **28** | Gegenmesser | | |
| **29** | Gutstrom | | |
| **30** | Verteilvorrichtung | | |
| **31** | Antriebsriemenscheibe | | |

## Patentansprüche

1. Mähdrescher (1) mit einer Häckselvorrichtung (24) und einer dieser nachgeordneten, durch einen Antriebsstrang mechanisch angetriebenen, mindestens zwei Läufer (45) aufweisenden Verteilvorrichtung (30), wobei der Antriebsstrang der Verteilvorrichtung (30) Folgendes umfasst:
- einen schaltbaren Riementrieb (37, 38, 39), der über eine Abtriebswelle (43) eine erste Getriebestufe (44) antreibt, wobei der Riementrieb (37, 38, 39) antriebsseitig an die Häckselvorrichtung (24) gekoppelt ist
- zumindest eine zweite Getriebestufe (47), die mit der ersten Getriebestufe (44) durch eine Welle (46) antriebsmäßig verbunden ist, wobei die jeweilige Getriebestufe (44, 47) zumindest eine Abtriebswelle zum Antreiben des Läufers (45) aufweist, **dadurch gekennzeichnet, dass** der Antriebsstrang eine Bremsvorrichtung (48) umfasst und dass der Riementrieb (37,38,39) als Kupplung (42) verwendet wird.

2. Mähdrescher (1) nach Anspruch 1 **dadurch gekennzeichnet, dass** der Riementrieb (37, 38, 39) durch einen Stufenantrieb (34) angetrieben ist.

3. Mähdrescher (1) nach Anspruch 1 **dadurch gekennzeichnet, dass** der Riementrieb (37, 38, 39) durch einen Variator angetrieben ist.

4. Mähdrescher (1) nach einem der Ansprüche 1 bis 3, **dadurch gekennzeichnet, dass** der Riementrieb (37, 38, 39) eine Spannrolle (40) umfasst, die durch einen Aktor (41) betätigbar ist.

5. Mähdrescher (1) nach Anspruch 4, **dadurch gekennzeichnet, dass** der Aktor als hydraulisch betätigbarer Hubzylinder (41) ausgeführt ist.

6. Mähdrescher (1) nach Anspruch 5, **dadurch gekennzeichnet, dass** der Hubzylinder (41) an einen Hydraulikkreislauf (52) und die Bremse (48) an einen zweiten Hydraulikkreislauf (54) am Mähdreschers (1) gekoppelt sind, die mit unterschiedlichen Hydraulikdrücken (P1, P2) arbeiten.

7. Mähdrescher (1) nach einem der Ansprüche 1 bis 6, **dadurch gekennzeichnet, dass** die Bremse (48) an einer der weiteren Getriebestufen (47) angeordnet ist.

8. Mähdrescher (1) nach einem der Ansprüche 1 bis 7, **dadurch gekennzeichnet, dass** die Bremse (48) in einer Riemenscheibe (31, 32, 37, 39) des Antriebsstranges angeordnet ist.

9. Mähdrescher (1) nach einem der Ansprüche 1 bis 8, **dadurch gekennzeichnet, dass** die Bremse (48) und die Kupplung (42) über ein gemeinsames Ventil (51) schaltbar sind.

10. Mähdrescher (1) nach Anspruch 9, **dadurch gekennzeichnet, dass** das Ventil (51) in Abhängigkeit vom Betriebszustand der Häckselvorrichtung (24) schaltbar ist.

## Claims

1. A combine harvester (1) comprising a chopping device (24) and a distribution device (30) which is arranged downstream thereof and which is mechanically driven by a drive train and which has at least two rotors (45), wherein the drive train of the distribution device (30) includes the following:
- a switchable belt drive (37, 38, 39) which drives a first transmission stage (44) by way of a drive output shaft (43), wherein the belt drive (37, 38, 39) is coupled at the drive side to the chopping device (24),
- at least one second transmission stage (47) drivingly connected to the first transmission stage (44) by a shaft (46), wherein the respective transmission stage (44, 47) has at least one drive output shaft for driving the rotor (45), **characterised in that** the drive train includes a braking device (48) and **in that** the belt drive (37, 38, 39) is used as a coupling (42).

2. A combine harvester (1) according to claim 1 **characterised in that** the belt drive (37, 38, 39) is driven by a step drive (34).

3. A combine harvester (1) according to claim 1 **characterised in that** the belt drive (37, 38, 39) is driven by a variator.

4. A combine harvester (1) according to one of claims 1 to 3 **characterised in that** the belt drive (37, 38, 39) includes a tensioning roller (40) actuatable by an actuator (41).

5. A combine harvester (1) according to claim 4 **characterised in that** the actuator is in the form of a hydraulically actuatable stroke cylinder (41).

6. A combine harvester (1) according to claim 5 **characterised in that** the stroke cylinder (41) is coupled to a first hydraulic circuit (52) and the brake (48) is coupled to a second hydraulic circuit (54) on the combine harvester (1), which operate with different hydraulic pressures (P1, P2).

7. A combine harvester (1) according to one of claims 1 to 6 **characterised in that** the brake (48) is arranged at one of the further transmission stages (47).

8. A combine harvester (1) according to one of claims 1 to 7 **characterised in that** the brake (48) is arranged in a pulley (31, 32, 37, 39) of the drive train.

9. A combine harvester (1) according to one of claims 1 to 8 **characterised in that** the brake (48) and the coupling (42) are switchable by way of a common valve (51).

10. A combine harvester (1) according to claim 9 **characterised in that** the valve (51) is switchable in dependence on the operating condition of the chopping device (24).

## Revendications

1. Moissonneuse-batteuse (1) comprenant un dispositif de hachage (24) et un dispositif d'épandage (30) disposé en aval de celui-ci, entraîné mécaniquement par l'intermédiaire d'une chaîne de transmission et comportant au moins deux rotors (45), la chaîne de transmission du dispositif d'épandage (30) comprenant ce qui suit :
- un entraînement à courroie commutable (37, 38, 39) qui, par l'intermédiaire d'un arbre de sortie (43), entraîne un premier étage de transmission (44), l'entraînement par courroie (37, 38, 39) étant couplé en entraînement au dispositif de hachage (24),
- au moins un second étage de transmission (47) qui est relié en entraînement au premier étage de transmission (44) par l'intermédiaire d'un arbre (46), chaque étage de transmission (44, 47) comportant au moins un arbre de sortie pour entraîner le rotor (45) correspondant, **caractérisée en ce que** la chaîne de transmission comporte un dispositif de freinage (48) et **en ce que** l'entraînement à courroie (37, 38, 39) est utilisé comme accouplement (42).

2. Moissonneuse-batteuse (1) selon la revendication 1, **caractérisée en ce que** l'entraînement à courroie (37, 38, 39) est entraîné par l'intermédiaire d'une commande par poulies à étages (34).

3. Moissonneuse-batteuse (1) selon la revendication 1, **caractérisée en ce que** l'entraînement à courroie (37, 38, 39) est entraîné par l'intermédiaire d'un variateur.

4. Moissonneuse-batteuse (1) selon une des revendications 1 à 3, **caractérisée en ce que** l'entraînement à courroie (37, 38, 39) comprend un galet tendeur (40) qui peut être actionné par l'intermédiaire d'un actionneur (41).

5. Moissonneuse-batteuse (1) selon la revendication 4, **caractérisée en ce que** l'actionneur est conformé en vérin à actionnement hydraulique (41).

6. Moissonneuse-batteuse (1) selon la revendication 5, **caractérisée en ce que** le vérin hydraulique (41) est couplé à un premier circuit hydraulique (52) et le frein (48) est couplé à un second circuit hydraulique (54) de la moissonneuse-batteuse (1), lesquels circuits hydrauliques fonctionnent à des pressions hydrauliques (P1, P2) différentes.

7. Moissonneuse-batteuse (1) selon une des revendications 1 à 6, **caractérisée en ce que** le frein (48) est disposé sur un des étages de transmission supplémentaires (47).

8. Moissonneuse-batteuse (1) selon une des revendications 1 à 7, **caractérisée en ce que** le frein (48) est disposé dans une poulie à courroie (31, 32, 37, 39) de la chaîne de transmission.

9. Moissonneuse-batteuse (1) selon une des revendications 1 à 8, **caractérisée en ce que** le frein (48) et l'accouplement (42) sont commutables par l'intermédiaire d'une valve commune (51).

10. Moissonneuse-batteuse (1) selon la revendication 9, **caractérisée en ce que** la valve (51) est commutable en fonction de l'état de fonctionnement du dispositif de hachage (24).
